# EUROPÄISCHE PATENTANMELDUNG

(11) **EP 1 005 030 A1**
(43) Veröffentlichungstag der Anmeldung: **31.05.2000**
(21) Anmeldenummer: 99203836.4
(22) Anmeldetag: 16.11.1999
(51) Int. Cl.: G11B 7/095

(54) **Gerät zum Abspielen von auf einer Informationsplatte gespeicherten Informationen**

(30) Priorität: 24.11.1998 DE 19854132
(71) Anmelder: Philips Corporate Intellectual Property GmbH, 52064 Aachen (DE); Koninklijke Philips Electronics N.V., 5621 BA Eindhoven (NL)
(72) Erfinder: Hopf, Christian, Philips Corp. Intell. Prop. GmbH, 52064 Aachen (DE); Rumpf, Horst, Philips Corp. Intel. Prop. GmbH, 52064 Aachen (DE)
(74) Vertreter: Gössmann, Klemens

(57) **Zusammenfassung**

Die Erfindung bezieht sich auf ein Gerät zum Abspielen von auf einer Informationsplatte gespeicherten Informationen und/oder zum Schreiben von Informationen auf eine Informationsplatte mit einem rotierend antreibbaren Plattenteller zur Rotation der Informationsplatte und einer bewegbaren optischen Abtasteinheit zur Abtastung der Oberfläche der Informationsplatte mittels eines optischen Signals, wobei die optische Abtasteinheit eine verstellbar gelagerte Linseneinheit zur Führung des optischen Signals mit einer Einstellvorrichtung zur Verstellung der Linseneinheit aufweist und daß die Einstellvorrichtung dazu vorgesehen ist, eine optimale Winkeleinstellung der Linseneinheit relativ zu einer auf dem Plattenteller rotierenden Informationsplatte vorzunehmen.

## Beschreibung

Die Erfindung bezieht sich auf ein Gerät mm Abspielen von auf einer Informationsplatte gespeicherten Informationen und/oder zum Schreiben von Informationen auf eine Informationsplatte mit einem rotierend antreibbaren Plattenteller zur Rotation der Informationsplatte und einer bewegbaren optischen Abtasteinheit zur Abtastung der Oberfläche der Informationsplatte mittels eines optischen Signals sowie auf ein Verfahren zur Winkeleinstellung einer optischen Abtasteinheit eines Gerätes zum Abspielen von auf einer Informationsplatte gespeicherten Informationen und/oder zum Schreiben von Informationen auf eine Informationsplatte, wobei ein rotierend antreibbarer Plattenteller zur Rotation der Informationsplatte vorgesehen ist und wobei die optische Abtasteinheit relativ zu der rotierenden Informationsplatte bewegbar ist und zur optischen Abtastung der Oberfläche der Informationsplatte mittels eines optischen Signals vorgesehen ist.

Ein derartiges Gerät ist beispielsweise aus der JP-A-03 228 229 bekannt. Dieses bekannte Gerät weist am Plattenteller-Motor Einstellachrauben auf; mittels derer eine Ausrichtung bzw. Justierung des Plattentellers relativ zu der optischen Abtasteinheit möglich ist. Eine derartige Justierung ist insbesondere bei Informationsplatten mit hoher Speicherdichte, wie z.B. DVD (Digital Video Disc)-Informationsplatten, erforderlich, da bei derartigen Informationsplatten engere Toleranzen hinsichtlich etwaigen Winkelfehlern zwischen der Abtasteinheit und der abzutastenden Informationsplatte als bei herkömmlichen Informationsplatten nach dem Compact-Disc-Standard eingehalten werden müssen. Derartige Winkelfehler werden auch als Tilt bezeichnet.

Es ist Aufgabe der Erfindung, ein anderes Gerät der eingangs genannten Art zu schaffen, welches eine Justiermöglichkeit zur Beseitigung von Winkelfehlern aufweist. Diese Aufgabe ist für das Gerät erfindungsgemäß dadurch gelöst, daß die optische Abtasteinheit eine verstellbar gelagerte Linseneinheit zur Führung des optischen Signals mit einer Einstellvorrichtung zur Verstellung der Linseneinheit aufweist und daß die Einstellvorrichtung dazu vorgesehen ist, eine optimale Winkeleinstellung der Linseneinheit relativ zu einer auf dem Plattenteller rotierenden Informationsplatte vorzunehmen.

Das erfindungsgemäße Gerät weist eine verstellbar gelagerte Linseneinheit auf. Die Linseneinheit weist optische Mittel zur Führung und/oder Fokussierung eines optischen Signals, insbesondere eines Laserstrahls, auf. Als Einstellvorrichtung zur Verstellung der Linseneinheit können beispielsweise Einstellschrauben verwendet werden. Die Linseneinheit ist vorzugsweise um zwei Schwenkachsen verschwenkbar gelagert, so daß der Winkel zwischen der Ausgangsstrahlrichtung der Linseneinheit und einer auf dem Plattenteller rotierenden Informationsplatte sowohl in radialer Richtung als auch in tangentialer Richtung, d.h. in Richtung der Informationsspuren der Informationsplatte, einstellbar ist. Um eine optimale Winkeleinstellung der Linseneinheit vorzunehmen, wird auf dem Plattenteller eine Informationsplatte aufgebracht und in Rotation versetzt. Diese zur Justierung der Linseneinheit verwendete Informationsplatte ist vorzugsweise eine Referenz-Informationsplatte, welche sehr genaue und exakte geometrische Abmessungen und optische Eigenschaften aufweist. Während sich die Referenz-Informationsplatte auf dem Plattenteller dreht, erfolgt mittels des Einstellmechanismus eine exakte Justierung der Linseneinheit bezüglich der auf dem Plattenteller rotierenden Referenz-Informationsplatte. Als Meßkriterium wird vorzugsweise der Jitterwert in Abhängigkeit vom Winkel verwendet.

Eine derartige verstellbar gelagerte Linseneinheit läßt sich in einfacher und zuverlässiger Weise realisieren. Die Abtasteinheiten einiger Hersteller weisen zudem bereits eine Einsteilvorrichtung zur Verstellung der Linseneinheit auf Diese bekannten Einstellvorrichtungen sind jedoch dazu vorgesehen, die Linseneinheit bezüglich dem Gehäuse der Abtasteinheit bzw. bezüglich der mechanischen Führung des Gehäuses der Abtasteinheit auszurichten. Eine Verstellung der Linseneinheit im zusammengebauten Modul relativ zu dem Plattenteller bzw. der auf dem Plattenteller rotierenden Informationsplatte ist jedoch nicht vorgesehen. Bei derartigen Abtasteinheiten mit bereits vorhandenen Einstellvorrichtungen für die Linseneinheit kann daher diese vorhandene Vorrichtung auch zur Winkeleinstellung der Linseneinheit relativ zu einer auf dem Plattenteller rotierenden Informationsplatte verwendet werden. Ein zusätzlicher Einstellmechanismus an dem Plattenteller bzw. dem Plattenteller-Motor ist nicht erforderlich.

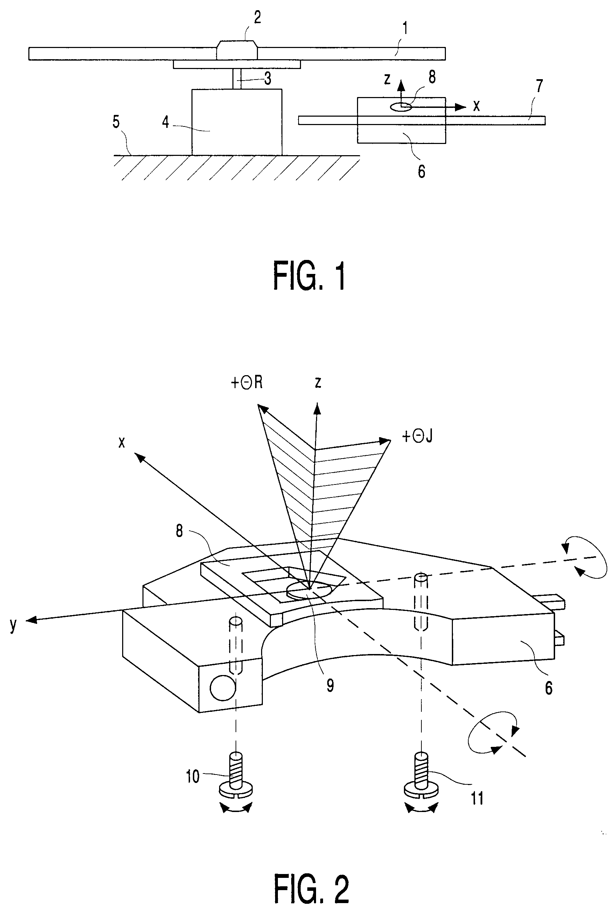

Ein schematisch dargestelltes Ausführungsbeispiel der Erfindung wird anhand der Zeichnung in den Figuren 1 und 2 näher erläutert. Es zeigen:
Fig. 1 in schematischer Seitenansicht ein Gerät zum Abspielen von auf einer Informationsplatte gespeicherten Informationen mit einem rotierend antreibbaren Plattenteller und einer in radialer Richtung verschiebbaren optischen Abtasteinheit, welche eine verstellbar gelagerte Linseneinheit aufweist,
Fig. 2 in perspektivischer Ansicht die Abtasteinheit des Gerätes gemäß Fig. 1.

Fig. 1 zeigt ein Gerät, welches zum Abspielen von auf einer kreisrunden Informationsplatte 1 gespeicherten Informationen vorgesehen ist. Die Informationsplatte 1 ist vorzugsweise eine Informationsplatte mit hoher Speicherdichte, beispielsweise eine Informationsplatte gemäß dem DVD (Digital Video Disc)-Standard. Die Informationsplatte 1 ist auf einem Plattenteller 2 aufgebracht, insbesondere aufgedrückt. Der Plattenteller 2 ist mittels eines Motors 4 über eine Weile 3 rotierend antreibbar. Der Motor 4 ist an einer Chassisplatte 5 des Gerätes befestigt. Zur Abtastung der Oberfläche der Informationsplatte 1 ist eine optische Abtasteinheit 6 vorgesehen, welche in radialer Richtung x entlang einer Führungsschiene 7 mittels eines nicht näher dargestellten Antriebsmechanismus verschiebbar ist. Die optische Abtasteinheit 6 weist eine Linseneinheit 8 auf, welche ein mittels eines nicht dargestellten Lasers erzeugtes optisches Signal auf die Oberfläche der Informationsplatte 1 leitet. Die Linseneinheit 8 ist gegenüber der optischen Abtasteinheit 6 verstellbar gelagen. Dies ermöglicht eine optimale Winkeleinstellung der Linseneinheit relativ zu der auf dem Plattenteller 2 rotierenden Informationsplatte 1.

Die optische Abtasteinheit 6 mit der verstellbar gelagerten Linseneinheit 8 ist in perspektivischer Ansicht in der Fig. 2 dargestellt. Die Linseneinheit 8 weist in ihrem Zentrum eine Ausgangslinse 9 auf. In dem Mittelpunkt dieser Ausgangslinse 9 ist ein Koordinatensystem x-y-z gelegt. Die z-Richtung verläuft von der Linse 9 in Richtung auf die Oberfläche der Informationsplatte 1. Die x-Richtung verläuft in radialer Richtung zu der sich drehenden Informationsplatte 1 und die y-Richtung verläuft tangential zu den kreisförmigen Informationsspuren der Informationsplatte 1. Zur optimalen Winkeleinstellung der Linseneinheit 8 bezüglich der rotierenden Informationsplatte 1 sind eine erste Einstellschraube 10 und eine zweite Einstellschraube 11 vorgesehen. Mittels der ersten Einstellschraube 10 läßt sich die Winkeleinheit 8 um die Achse y verschwenken, wodurch ein Winkel θR einstellbar ist. Mittels der zweiten Einstellschraube 11 kann die Linseneinheit 8 um die x-Achse verschwenkt werden, wodurch ein Winkel θJ einstellbar ist. Die Winkel θR und θJ werden jeweils gebildet zwischen der tatsächlichen Strahlrichtung des auf die Informationsplatte gerichteten Laserstrahls und der optimalen Strahlrichtung des Laserstrahls. Die optimale Strahlrichtung läßt sich durch Verschwenken der Linseneinheit 8 einstellen. Als Meßkriterium bei der Einstellung der Linseneinheit 8 wird der Jitterwert in Abhängigkeit des Winkels verwendet.

## Patentansprüche

1. Gerät zum Abspielen von auf einer Informationsplatte gespeicherten Informationen und/oder zum Schreiben von Informationen auf eine Informationsplatte mit einem rotierend antreibbaren Plattenteller zur Rotation der Informationsplatte und einer bewegbaren optischen Abtasteinheit zur Abtastung der Oberfläche der Informationsplatte mittels eines optischen Signals, dadurch gekennzeichnet,
daß die optische Abtasteinheit eine verstellbar gelagerte Linseneinheit zur Führung des optischen Signals mit einer Einstellvorrichtung zur Verstellung der Linseneinheit aufweist und daß die Einstellvorrichtung dazu vorgesehen ist, eine optimale Winkeleinstellung der Linseneinheit relativ zu einer auf dem Plattenteller rotierenden Informationsplatte vorzunehmen.

2. Verfahren zur Winkeleinstellung einer optischen Abtasteinheit eines Gerätes zum Abspielen von auf einer Informationsplatte gespeicherten Informationen und/oder zum Schreiben von Informationen auf eine Informationsplatte, wobei ein rotierend antreibbarer Plattenteller zur Rotation der Informationsplatte vorgesehen ist und wobei die optische Abtasteinheit relativ zu der rotierenden Informationsplatte bewegbar ist und zur optischen Abtastung der Oberfläche der Informationsplatte mittels eines optischen Signals vorgesehen ist, dadurch gekennzeichnet,
daß die optische Abtasteinheit eine verstellbar gelagerte Linseneinheit zur Führung des optischen Signals mit einer Einstellvorrichtung zur Verstellung der Linseneinheit aufweist und daß mittels der Einstellvorrichtung eine optimale Winkeleinstellung der Linseneinheit relativ zu einer auf dem Plattenteller rotierenden Informationsplatte vorgenommen wird.

3. Verwendung einer verstellbar gelagerten Linseneinheit einer optischen Abtasteinheit eines Gerätes, das zum Abspielen von auf einer Informationsplatte gespeicherten Informationen und/oder zum Schreiben von Informationen auf eine Informationsplatte vorgesehen ist, zur optimalen Winkeleinstellung der Linseneinheit relativ zu einer auf einem Plattenteller des Gerätes rotierenden Informationsplatte.
